# EUROPÄISCHE PATENTSCHRIFT

(11) **EP 2 042 542 B1**
(45) Veröffentlichungstag und Bekanntmachung des Hinweises auf die Patenterteilung: **27.04.2011**
(21) Anmeldenummer: 08161698.9
(22) Anmeldetag: 04.08.2008
(51) Int. Cl.: C08G 77/46, C08J 9/00

(54) **Verwendung linearer Siloxane und Verfahren zu deren Herstellung**
Application of linear siloxanes and method for their manufacture
Utilisation de siloxanes linéaires et leur procédé de fabrication

(30) Priorität: 28.09.2007 DE 102007046736
(43) Veröffentlichungstag der Anmeldung: 01.04.2009
(73) Patentinhaber: Evonik Goldschmidt GmbH, 45127 Essen (DE)
(72) Erfinder: Brückner, Arndt, 45473, Mülheim an der Ruhr (DE); Glos, Martin, 46325, Borken (DE)

(56) Entgegenhaltungen:
- EP-B- 1 173 267
- US-A- 5 908 871

## Beschreibung

Die Erfindung betrifft die Verwendung linearer Polyethersiloxane bei der Polyesterpolyurethanherstellung und ein Verfahren zu deren Herstellung.

Organomodifizierte Siloxane werden aufgrund ihrer einzigartigen Eigenschaften wie Wasserabstoßung, Grenzflächenaktivität, Temperaturstabilität etc. in zahlreichen technischen Anwendungen eingesetzt. Dazu zählen die Stabilisierung von Polyurethanschäumen, der Einsatz als Emulgatoren, der Einsatz in Trennbeschichtungen und viele weitere mehr.

Lineare Siloxane, die eine diolfunktionelle organische Modifizierung aufweisen, werden in der europäischen Patentanmeldung EP 0 356 963 und der europäischen Patentschrift EP 0 277 816 beschrieben. Aufgrund der Diolfunktionalität können sie als einreagierende Comonomere für die Herstellung von Polyurethanen oder Polyestern dienen, wobei diese Polymere dadurch in ihren wasserabweisenden und abriebvermindernden Eigenschaften sowie Gleiteigenschaften verbessert werden. Eine Verwendung als Stabilisator von Polymerschäumen wird nicht erwähnt.

Siloxane zur Stabilisierung von Polyurethanschäumen sind in der Regel zwei- oder mehrfach modifiziert. So beschreiben beispielsweise EP 0 048 984 und die darin zitierten Schriften verschiedene lineare Siloxane mit mehreren seitenständigen Gruppen (Cyano-Gruppen, Polyoxyalkylen-Gruppen und PhenylGruppen) zur Verwendung in Polyesterpolyurethanschaum.

Die Schrift US 5,908,871 beschreibt ein Siloxan, das monomodifiziert ist, basierend auf Heptamethyltrisiloxan zur Verwendung als Stabilisator in PU-Esterschaum. Hierbei werden bei der Verschäumung die Siloxane in Mengen von 1 bis 1,5 Teilen bezogen auf 100 Teile des Polyols verwendet. Die organomodifizierte Gruppe befindet sich hier in Seiten- und nicht in Endstellung der Siloxankette.

Nachteilig an den bekannten Schaumstabilisatoren ist z. B., dass diese in relativ hohen Konzentrationen eingesetzt werden müssen.

Aufgabe der vorliegenden Erfindung war die Bereitstellung von alternativen Verbindungen zur Stabilisierung von Polyesterpolyurethanschäumen, vorzugsweise von solchen Verbindungen, die in geringen Konzentrationen bereits eine ausreichende Stabilisierung eines Polyesterpolyurethanschaums ermöglichen.

Überraschenderweise wurde gefunden, dass die erfindungsgemäße Aufgabe durch lineare Siloxane gelöst werden kann, die nur eine organomodifizierte Gruppe enthalten, wobei diese Gruppe an ein terminales Siliziumatom gebunden ist.

Gegenstand der vorliegenden Erfindung ist deshalb die Verwendung einer Zusammensetzung enthaltend zumindest eine Verbindung der allgemeinen Formel (I) 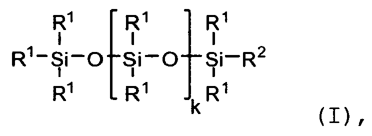 wobei
- R¹: gleiche oder verschiedene, geradkettige oder verzweigte, aliphatische oder aromatische, gegebenenfalls halogenierte, gegebenenfalls ungesättigte Kohlenwasserstoffreste mit 1 bis 8 Kohlenstoffatomen, vorzugsweise mit einem Kohlenstoffatom, sind,
- k: = 0 bis 10 ist, wobei k beim Vorhandensein nur einer Verbindung der Formel (I) die tatsächliche Anzahl der mit dem Index k gekennzeichneten Einheiten und bei Vorhandensein von mehreren Verbindungen der Formel (I) den Mittelwert der Anzahl der Einheiten darstellt,
- R²: eine Gruppe der Formel A-B-D-Q darstellt, wobei
A ein Sauerstoffatom, eine CH₂-Gruppe oder eine CH=CH-Gruppe ist,
B eine CH₂-Gruppe oder ein zweiwertiger Rest, ausgewählt aus linearen oder verzweigten, gesättigten, ein- oder mehrfach ungesättigten Alkyl-, Aryl-, Alkylaryl- oder Arylalkyl-Oxygruppen mit 2 bis 20 Kohlenstoffatomen oder eine Gruppe der Formel -CH₂-O- (CH₂)₄-O- ist (wobei diese sich als A-CH₂-O-(CH₂)4-O-D-Q in R² einfügt,
D eine Gruppe der allgemeinen Formel (II)

- (C₂H₄O)ₙ(C₃H₆O)ₒ(C₁₂H₂₄O)ₚ(C₈H₈O)_{q}(C₄H₈O)ᵣ- (II)

ist, mit
n, o, p, q und r voneinander unabhängige ganze Zahlen von 0 bis 50, wobei die Summe der Indizes n + o + p + q + r größer oder gleich 3 ist und die allgemeine Formel II ein statistisches Oligomer oder ein Blockoligomer darstellt (wobei in Formel II C₁₂H₂₄O für Dodecenoxid und C₈H₈O für Styroloxid steht), und
Q ein Rest, ausgewählt aus Wasserstoff, linearen oder verzweigten, gesättigten, ein- oder mehrfach ungesättigten, Alkyl-, Aryl-, Alkylaryl- oder Arylalkylgruppen mit 1 bis 20 Kohlenstoffatomen, gegebenenfalls ein oder mehrere Heteroatome enthaltend, gegebenenfalls ein oder mehrere Carbonylgruppen enthaltend, gegebenenfalls mit einer ionischen organischen Gruppe modifiziert, die beispielsweise die Heteroatome Schwefel, Phosphor und/oder Stickstoff enthalten kann, beziehungsweise diese Verbindungen enthaltenden technischen Mischungen oder bestehend aus zumindest einer Verbindung der Formel (I) bei der Herstellung von Polyesterpolyurethanschäumen.

Ebenfalls Gegenstand der vorliegenden Erfindung ist ein Verfahren zur Herstellung einer Zusammensetzung enthaltend Verbindungen der allgemeinen Formel (I) wie oben definiert, dadurch gekennzeichnet, dass es die Verfahrensschritte
a) Äquilibrieren einer Mischung enthaltend R¹₃SiO_{1/2}-Gruppen und R¹₂SiO_{2/2}-Gruppen haltige Siloxane und HSiR¹₂O_{1/2}-Gruppen und R¹₂SiO_{2/2}-Gruppen haltige Siloxane und gegebenenfalls Cyclosiloxane, wobei das molare Verhältnis von R¹₃SiO_{1/2}-Gruppen zu HSiR¹₂O_{1/2}-Gruppen von 1:4 bis 9:1 beträgt,
b) Umsetzen der in Verfahrensschritt a) erhaltenen Äquilibriermischung mit einer Verbindung A'-B-D-Q mit A' = eine OH-Gruppe, eine Vinyl-Gruppe oder eine Ethinyl-Gruppe und B, D und Q wie in Anspruch 1 definiert,
aufweist.

Die Verwendung von erfindungsgemäßen Zusammensetzungen, die Siloxane der Formel (I) aufweisen oder aus ihnen bestehen hat den Vorteil, dass die Siloxane in geringeren Mengen, als in den bisher bekannten Systeme, im Polyesterpolyurethanschaum eingesetzt werden können, ohne dass es zu fehlerhaften Schäumen kommt.

Außerdem sind die bei erfindungsgemäßer Verwendung der Zusammensetzung erhaltenen Schäume offenzelliger als bei der Verwendung der bisher bekannten Siloxane. Ein geringerer Siloxananteil kann auch Vorteile bei der weiteren Verwendung und Verarbeitung der Schäume bieten. Beispielsweise kann aus dem geringeren Siloxananteil eine bessere Flammkaschierbarkeit und/oder eine verbesserte Wasseraufnahme resultieren.

Die erfindungsgemäß verwendeten Siloxane bzw. Zusammensetzungen und ein Verfahren zu deren Herstellung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Die erfindungsgemäße Verwendung zeichnet sich dadurch aus, dass eine Zusammensetzung enthaltend zumindest eine Verbindung bzw. bestehend aus zumindest einer Verbindung der allgemeinen Formel (I) 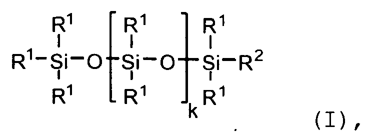 wobei
- R¹: gleiche oder verschiedene, geradkettige oder verzweigte, aliphatische oder aromatische, gegebenenfalls halogenierte, gegebenenfalls ungesättigte Kohlenwasserstoffreste mit 1 bis 8 Kohlenstoffatomen, vorzugsweise mit einem Kohlenstoffatom (Methylrest), sind,
- k: = 0 bis 10, vorzugsweise 1 bis 7, bevorzugt von 1 bis 4, wobei k beim Vorhandensein nur einer Verbindung der Formel (I) die tatsächliche Anzahl der mit dem Index k gekennzeichneten Einheiten und bei Vorhandensein von mehreren Verbindungen der Formel (I) den Mittelwert der Anzahl der Einheiten darstellt,
- R²: eine Gruppe der Formel A-B-D-Q darstellt, wobei
A ein Sauerstoffatom, eine CH₂-Gruppe oder eine CH=CH-Gruppe ist,
B eine CH₂-Gruppe oder ein zweiwertiger Rest, ausgewählt aus linearen oder verzweigten, gesättigten, ein- oder mehrfach ungesättigten Alkyl-, Aryl-, Alkylaryl- oder Arylalkyl-Oxygruppen mit 2 bis 20 Kohlenstoffatomen oder eine Gruppe der Formel -CH₂-O- (CH₂)₄-O- ist,
D eine Gruppe der allgemeinen Formel (II)

-(C₂H₄O)ₙ(C₃H₆O)ₒ(C₁₂H₂₄O)ₚ(C₈H₈O)_{q}(C₄H₈O)ᵣ- (II)

ist,
mit n, o, p, q und r voneinander unabhängige ganze Zahlen von 0 bis 50, wobei die Summe der Indizes n + o + p + q + r größer oder gleich 3 ist und die allgemeine Formel II ein statistisches Oligomer oder ein Blockoligomer darstellt, und
Q ein Rest, ausgewählt aus Wasserstoff, linearen oder verzweigten, gesättigten, ein- oder mehrfach ungesättigten, Alkyl-, Aryl-, Alkylaryl- oder Arylalkylgruppen mit 1 bis 20 Kohlenstoffatomen, gegebenenfalls ein oder mehrere Heteroatome enthaltend, gegebenenfalls ein oder mehrere Carbonylgruppen enthaltend, gegebenenfalls mit einer ionischen organischen Gruppe modifiziert, die beispielsweise die Heteroatome Schwefel, Phosphor und/oder Stickstoff enthalten kann,
bei der Herstellung von Polyesterpolyurethanschäumen verwendet wird.

Wie aus der Definition für den Rest R² hervorgeht, kann die Anbindung des Rests R² über ein Kohlenstoffatom (SiC-Verknüpfung) oder ein Sauerstoffatom (SiOC-Verknüpfung) erfolgen.

Vorzugsweise weist die Zusammensetzung Verbindungen der Formel (I) auf bzw. besteht aus diesen, bei denen alle Reste R¹ der allgemeinen Formel (I) für Methylgruppen stehen. Bevorzugt weist die Zusammensetzung Verbindungen der Formel (I) auf bzw. besteht aus diesen, bei denen der Rest R¹ der allgemeinen Formel (I) für Methylgruppen steht, p = q = r = 0 ist, die Summe der Indizes n + o größer oder gleich 3 ist und Q ausgewählt ist aus der Gruppe umfassend Wasserstoff und 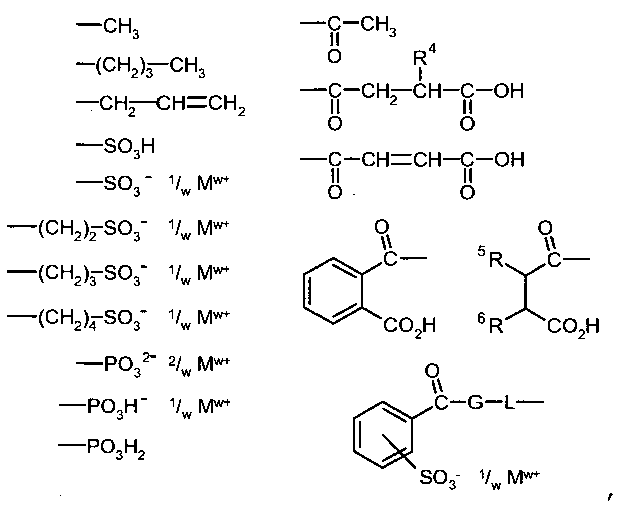 wobei
- M^{w+}: für ein w-wertiges Kation mit w = 1, 2, 3 oder 4 steht, insbesondere K⁺, Na⁺, NH₄⁺, (iC₃H₇)NH₃⁺ oder (CH₃)₄N⁺, und
- R⁴: für Wasserstoff oder einen, gegebenenfalls verzweigten aliphatischen Rest mit 1 bis 20 Kohlenstoffatomen steht,
- R⁵ und R⁶: für gleiche oder verschiedene, verbrückte oder unverbrückte, verzweigte oder unverzweigte aliphatische Reste stehen,
- G: ein Sauerstoffatom, NH oder eine NR⁷ Gruppe ist, wobei R⁷ eine einwertige Alkylgruppe ist,
- L: einen zweiwertigen verzweigten oder unverzweigten, gegebenenfalls Sauerstoff und/oder Stickstoff enthaltend, Alkylrest, vorzugsweise einen 3 bis 6 Kohlenstoffatome und 0 bis 1 Stickstoffatome aufweisenden Rest
darstellt.

Vorzugsweise weist die Zusammensetzung Verbindungen der Formel (I) auf bzw. besteht aus diesen, bei denen der Rest R¹ der allgemeinen Formel (I) ausschließlich für Methylgruppen steht, p = q = r = 0 ist, die Summe der Indizes n + o größer oder gleich 3 ist, und Q ausgewählt ist aus der Gruppe umfassend Wasserstoff, Acetyl-, Methyl-, Ethyl-, Butyl- und Allylreste.

Es ist dem Fachmann geläufig, dass die Verbindungen in Form eines Gemisches mit einer im Wesentlichen durch statistische Gesetze geregelten Verteilung vorliegen. Beispielsweise kann in der Zusammensetzung ein Gemisch aus Verbindungen der Formel (I) mit k = 1, 2, 3 und 4 usw. vorliegen. Als besonders günstig im Sinne der Erfindung hat es sich herausgestellt, wenn die Verbindungen der allgemeinen Formel (I) als Mischung eingesetzt werden. Es kann dann auf eine aufwendige Trennung verzichtet werden.

In einer bevorzugten Ausführungsform der erfindungsgemäßen Verwendung werden Siloxane der Formel (I) verwendet, bei denen der Rest A für eine CH₂-Gruppe steht. Bei dieser Ausführungsform erfolgt die Anbindung des Restes R² über eine SiC-Verknüpfung.

In einer weiteren bevorzugten Ausführungsform der erfindungsgemäßen Verwendung werden Siloxane der Formel (I) verwendet, bei denen der Rest A für ein Sauerstoffatom steht. Bei dieser Ausführungsform erfolgt die Anbindung des Restes R² über eine Si-O-C-Verknüpfung.

Neben den Verbindungen der Formel (I) kann die erfindungsgemäß verwendete Zusammensetzung eine oder mehrere difunktionelle Verbindungen der allgemeinen Formel (III) 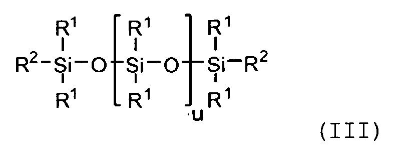 aufweisen, wobei die Reste R¹ und R² wie oben definiert sind und u = 0 bis 20, vorzugsweise 1 bis 10 ist, wobei u beim Vorhandensein nur einer Verbindung der Formel (III) die tatsächliche Anzahl der mit dem Index u gekennzeichneten Einheiten und bei Vorhandensein von mehreren Verbindungen der Formel (III) den Mittelwert der Anzahl der Einheiten darstellt. Das molare Verhältnis der difunktionellen Verbindungen der Formel (III) zu monofunktionellen Verbindungen der Formel (I) beträgt vorzugsweise < oder = 1/3, bevorzugt ≤ 0,2, besonders bevorzugt von ≤ 0,1 bis > 0.

Neben den Verbindungen der Formel (I) kann die erfindungsgemäß verwendete Zusammensetzung eine oder mehrere Verbindungen der allgemeinen Formel (IV) aufweisen. 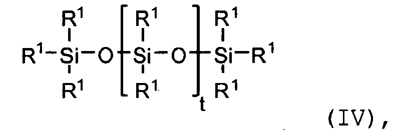 mit R¹ wie in Anspruch 1 definiert und t = 0 bis 20, vorzugsweise 1 bis 10, wobei t beim Vorhandensein nur einer Verbindung der Formel (IV) die tatsächliche Anzahl der mit dem Index t gekennzeichneten Einheiten und bei Vorhandensein von mehreren Verbindungen der Formel (IV) den Mittelwert der Anzahl der Einheiten darstellt.

Das molare Verhältnis der Formel (IV) zu monofunktionellen Verbindungen der Formel (I) beträgt vorzugsweise < oder = 15 Massen-%, bevorzugt ≤ 10 Massen-%, ganz besonders bevorzugt ≤ 5 Massen-%. Es können erfindungsgemäß aber auch Zusammensetzungen verwendet werden, die keine Verbindungen der Formel (IV) aufweisen.

Polyesterpolyurethanschäume können z. B. hergestellt werden durch die Umsetzung einer Reaktionsmischung bestehend aus
a) einem Polyesterpolyol, welches im Durchschnitt mindestens zwei Hydroxy-Gruppen pro Molekül trägt,
b) einem Polyisocyanat das im Durchschnitt mindestens zwei Isocyanat-Gruppen pro Molekül trägt, wobei das Polyol und das Polyisocyanat den größten Teil der Reaktionsmischung ausmachen und das Verhältnis der beiden Komponenten zueinander geeignet ist um einen Schaum herzustellen,
c) einem Treibmittel in geringen Mengen, das für die Schäumung der Reaktionsmischung ausreicht,
d) einer katalytische Menge eines Katalysators zur Herstellung des Polyurethanschaums, dieser besteht meist aus einem oder mehreren Aminen, und
e) einem Schaumstabilisator, bestehend aus Siloxanen und/oder anderen Tensiden, der die schäumende Mischung ausreichend stabilisiert.

So können auch die Siloxane der allgemeinen Formel (I) allein oder in Kombination mit nicht Si-haltigen Tensiden als Stabilisator eingesetzt werden. Die Siloxane der allgemeinen Formel (I) können auch in geeigneten Lösungsmitteln verdünnt werden, um die Dosierbarkeit zu vereinfachen oder auch die Einarbeitbarkeit in das Reaktionsgemisch zu verbessern.

Entsprechend können die erfindungsgemäß verwendeten Zusammensetzungen
a) ein Polyesterpolyol, welches vorzugsweise im Durchschnitt mindestens zwei Hydroxy-Gruppen pro Molekül trägt,
b) ein Polyisocyanat das im Durchschnitt vorzugsweise mindestens zwei Isocyanat-Gruppen pro Molekül trägt, wobei Polyesterpolyole und Polyisocyanate den größeren Teil der Zusammensetzung (Reaktionsmischung) ausmachen und das Verhältnis der beiden Komponenten zueinander geeignet sein sollte um einen Schaum herzustellen,
c) ein Treibmittel, das für die Schäumung der Reaktionsmischung ausreicht,
d) eine katalytische Menge eines Katalysators zur Herstellung des Polyurethanschaums, vorzugsweise eines ein oder mehrere Amine aufweisenden Katalysators, und optional
e) mindestens einem von Verbindungen der Formel (I) verschiedenen Schaumstabilisator, der die schäumende Mischung ausreichend stabilisiert,
enthalten.

Als weitere Additive können in der erfindungsgemäß verwendeten Zusammensetzung enthalten sein: Flammschutzmittel, Zellöffner, Farbstoffe, UV-Stabilisatoren, Substanzen zur Verhinderung eines mikrobiellen Befalls sowie weitere Zusätze, die für den Fachmann nahe liegend und hier nicht weiter aufgeführt sind.

Es können die nach dem Stand der Technik bekannten Polyesterpolyole, Isocyanate, Treibmittel, Flammschutzmittel, Katalysatoren, Additive und Herstellungsverfahren zum Einsatz kommen. Beispielsweise können die in der Schrift EP 0 048 984, die hiermit als Referenz angeführt wird, genannten Komponenten verwendet werden.

Bei der erfindungsgemäßen Verwendung wird vorzugsweise soviel der Zusammensetzung eingesetzt, dass der Anteil der Verbindung der allgemeinen Formel (I) an der zu verschäumenden Mischung vorzugsweise von 0,05 bis 1 Massen-%, bevorzugt von 0,07 bis 0,8 Massen-% und besonders bevorzugt von 0,1 bis 0,5 Massen-% beträgt. Der Anteil der Verbindung der Formel (III) an der zu verschäumenden Mischung beträgt vorzugsweise von 0 bis 0,2 Massen-%, bevorzugt von 0 bis 0,1 Massen-% und besonders bevorzugt von 0,01 bis 0,06 Massen-%. Der Anteil der Verbindung der Formel (IV) an der zu verschäumenden Mischung beträgt vorzugsweise von 0 bis 0,15 Massen-%, bevorzugt von 0,001 bis 0,1 Massen-% und besonders bevorzugt von 0,002 bis 0,05 Massen-%.

Die erfindungsgemäß verwendeten Siloxane können auf bekannte Weise gemäß dem Stand der Technik hergestellt werden. So können die linearen Siloxane z. B. dadurch synthetisiert werden, dass zunächst ein Siloxan mit nur einer SiH-Funktionalität an einem Ende durch Ringöffnungspolymerisation von Cyclosiloxanen, insbesondere Hexamethylcyclotrisiloxan hergestellt wird, das anschließend in einer Hydrosilylerungsreaktion organomodifiziert wird. Die Ringöffnungspolymerisation von Cyclosiloxanen ist dem Fachmann wohlbekannt und wird beispielsweise in J. Chojnowski, M. Cypryk, Synthesis of Linear Polysiloxanes, Kapitel 1 in R. G. Jones et al., Silicon-Containing Polymers, Kluwer, 2000, beschrieben.

Diese bekannten Verfahren, die sich der Ringöffnungspolymerisation von Cyclosiloxanen bedienen, sind durch mehrere Nachteile gekennzeichnet: In der Regel muss als Cyclosiloxan das ringgespannte Hexamethylcyclotrisiloxan verwendet werden, das in Siloxanrohstoffherstellungsprozessen nur in geringem Umfang anfällt. Darüber hinaus ist der Einsatz von sehr feuchtigkeitsempfindlichen und toxikologisch bedenklichen Lithiumbasen erforderlich.

Die erfindungsgemäß verwendeten Siloxane der Formel (I) bzw. die erfindungsgemäß verwendeten Zusammensetzungen werden deshalb vorzugsweise mit dem nachfolgend beschriebenen erfindungsgemäßen Verfahren hergestellt, welches die Nachteile des Verfahrens des Standes der Technik nicht aufweist.

Das erfindungsgemäße Verfahren zur Herstellung einer Zusammensetzung enthaltend Verbindungen der allgemeinen Formel (I) wie oben definiert, zeichnet sich dadurch aus, dass es die Verfahrensschritte
a) Äquilibrieren einer Mischung enthaltend R¹₃SiO_{1/2}-Gruppen und R¹₂SiO_{2/2}-Gruppen haltige Siloxane und HSiR¹₂O_{1/2}-Gruppen und R¹₂SiO_{2/2}-Gruppen haltige Siloxane und gegebenenfalls Cyclosiloxane, wobei das molare Verhältnis von R'₃SiO_{1/2}-Gruppen zu HSiR¹₂O_{1/2}-Gruppen von 1:4 bis 9:1, bevorzugt von 1:1 bis 6:1, besonders bevorzugt von 3:2 bis 5:1 und ganz besonders bevorzugt von 5:2 bis 4:1 beträgt (bzw. die Siloxane in einem Verhältnis eingesetzt werden, dass dieses Verhältnis vorliegt),
b) Umsetzen der in Verfahrensschritt a) erhaltenen Äquilibriermischung mit einer Verbindung A'-B-D-Q,
mit A" = eine OH-Gruppe, eine Vinyl-Gruppe oder eine Ethinyl-Gruppe und R¹, B, D und Q wie oben definiert, vorzugsweise R¹ = Methyl, aufweist.

Die Äquilibrierung in Verfahrensschritt a) kann auf eine dem Fachmann bekannte Weise, bzw. so wie im Stand der Technik beschrieben, durchgeführt werden. Geeignete Methoden zur Äquilibrierung von Siloxanen werden zum Beispiel in der Patentschrift EP 1 439 200 sowie in W. Noll, Chemie und Technologie der Silicone, Verlag Chemie, Weinheim, 2. Auflage 1968, Seiten 187-197 beschrieben. Der Inhalt dieser Schriften wird hiermit als Referenz eingeführt und gilt als Teil des Offenbarungsgehaltes der vorliegenden Anmeldung.

Es kann von Vorteil sein, im Verfahrensschritt a) die Äquilibrierung mit einem Überschuss an HSiMe₂-Gruppen gegenüber R¹₃Si-Gruppen durchzuführen, und auf diese Weise den Anteil an Siliconöl (Verbindungen der Formel (IV)) in der Äquilibriermischung zu verringen. Dies führt gemäß der Statistik nach der Durchführung des Verfahrensschrittes b) zu einem erhöhten Anteil an difunktionellem Produkt der allgemeinen Formel (III). So sind Anwendungen möglich, bei denen eine solche Mischung - gegebenenfalls vorteilhafterweise - zum Einsatz kommen kann, in der das Vorhandensein des difunktionellen Produkts die Anwendung nicht stört oder in der das Vorhandensein sogar einen für die Anwendung positiven Effekt zeigt. Die Verringerung des Anteils an Siliconöl in der Äquilibriermischung kann gegebenenfalls dessen Abtrennung (optionaler Verfahrensschritt c)) erübrigen und somit das Verfahren erheblich vereinfachen.

In einer bevorzugten Ausführungsform des erfindungsgemäßen Verfahrens wird zur Umsetzung in Verfahrensschritt b) eine Hydrosilylierungsreaktion durchgeführt. Die Verbindung A'-B-D-Q wird somit über eine Si-C-Bindung mit dem Siloxan verknüpft. Mögliche Hydrosilylierungsverfahren, die als Verfahrensschritt b) eingesetzt werden können, werden z. B. in Bogdan Marciniec, "Comprehensive Handbook on Hydrosilylation", Pergamon Press 1992; Iwao Ojima, "The hydrosilylation reaction" in "The chemistry of organic silicon compounds" (Herausgeber S. Patai und Z. Rappoport), Wiley 1989 und in Iwao Ojima et al., "Recent advances in the hydrosilylation and related reactions" in "The chemistry of organic silicon compounds, Vol. 2" (Herausgeber Z. Rappoport und Y. Apeloig), Wiley 1998, beschrieben, auf die ausdrücklich verwiesen wird und deren Inhalt zum Offenbarungsgehalt der vorliegenden Anmeldung gehört.

In einer weiteren bevorzugten Ausführungsform des erfindungsgemäßen Verfahrens wird zur Umsetzung in Verfahrensschritt b) eine dehydrogenative Kondensation durchgeführt. Diese kann z. B. so durchgeführt werden, dass die in Verfahrensschritt a) erhaltene, SiH-Gruppen enthaltende Äquilibriermischung mit hydroxyfunktionellen organischen Verbindungen, wie beispielsweise Alkoholen, unter Freisetzung von Wasserstoffgas kondensiert. Solche Umsetzungen sind beispielsweise in dem Buch "Silicone Chemie und Technologie", Vulkan-Verlag Essen, 1989, und in den Schriften EP 1 460 098, DE 103 12 636, DE 103 59 764, DE 10 2005 051 939 und EP 1 627 892 sowie in JP 48-19941, auf die US 5,147,965 verweist, beschrieben. Der Inhalt dieser Schriften wird hiermit als Referenz eingeführt und gilt als Teil des Offenbarungsgehaltes der vorliegenden Anmeldung. Als Alkohole kommen dabei bevorzugt OH-terminierte Polyether zum Einsatz.

Das molare Verhältnis von reaktiven Gruppen (OH-Gruppen im Falle der dehydrogenativen Kondensation, hydrosilylierbare Mehrfachbindungen im Falle der Hydrosilylierungsreaktion) zu Silanwasserstoffgruppen kann in Verfahrensschritt b) beliebig gewählt werden. Vorzugsweise wird ein molares Verhältnis von 1 bis 2, bevorzugt von 1 bis 1,5 eingestellt. Es kann vorteilhaft sein, wenn anschließend an Verfahrensschritt b) in einem Verfahrensschritt c) Verbindungen der allgemeinen Formel (IV) 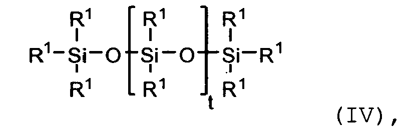 mit R¹ wie in Anspruch 1 definiert und t = 0 bis 20, vorzugsweise 1 bis 10, wobei t beim Vorhandensein nur einer Verbindung der Formel (IV) die tatsächliche Anzahl der mit dem Index t gekennzeichneten Einheiten und bei Vorhandensein von mehreren Verbindungen der Formel (IV) den Mittelwert der Anzahl der Einheiten darstellt, vollständig oder teilweise aus der in Verfahrensschritt b) erhaltenen Reaktionsmischung z. B. destillativ entfernt werden. Auf diese Weise kann eine Zusammensetzung erhalten werden, die einen geringen Anteil an unmodifizierten Siloxanen (Verbindungen der Formel (IV)) bzw. keine dieser Verbindungen aufweist. Verbindungen der Formel (IV) können z. B. Hexamethyldisiloxan, Octamethyltrisiloxan, Decamethyltetrasiloxan, Dodecamethylpentasiloxan oder Tetradecamethylhexasiloxan sein. Insbesondere kann auf diese Weise im Zuge des Verfahrensschrittes a) gebildetes Siliconöl bzw. nicht umgesetzter Ausgangsstoff abgetrennt werden bzw. der Gehalt in der Zusammensetzung verringert werden.

Eine destillative, vollständige oder teilweise Entfernung der Verbindungen der Formel (IV) kann z. B. bei einer Sumpftemperatur von 60 bis 150°C, bevorzugt von 100 bis 145°C, gegebenenfalls unter vermindertem Druck, vorzugsweise bei einem betrieblich realisierbaren Vakuum durchgeführt werden.

Es können jedoch auch Fälle möglich sein, in denen anwesendes Siliconöl einen erwünschten Effekt zeigt.
Das erfindungsgemäße Verfahren, insbesondere die Verfahrensschritte a) und b), können in Gegenwart eines Lösemittels wie beispielsweise Toluol, Xylol oder Wasser oder bevorzugt ohne Anwesenheit von Lösemittel durchgeführt werden. Das erfindungsgemäße Verfahren, insbesondere die Verfahrensschritte a) und/oder b), kann/können kontinuierlich oder diskontinuierlich durchgeführt werden. In den Verfahrenschritten a) und b) können die Reaktanden in beliebiger Reihenfolge miteinander gemischt werden.

Die Verbindungen der allgemeinen Formel (I) können auch nach anderen als dem Äquilibrierverfahren hergestellt werden. Dies sind insbesondere, jedoch nicht ausschließlich, anionische und kationische Ringöffnungspolymerisationen von Siloxancyclen, wie in J. Chojnowski, M. Cypryk, Synthesis of Linear Polysiloxanes, Kapitel 1 in R. G. Jones et al., Silicon-Containing Polymers, Klumer, 2000, und beispielsweise in den Schriften US 6998437, EP 0499233, JP 01-098631, JP 2005/047852, WO 2006/102050 und WO 2006/122704 beschrieben. Bei SiH-terminierten Siloxanen kann die organische Gruppe im Zuge einer Hydrosilylierungsreaktion oder einer dehydrogenativen Kondensation angebracht werden. Im Falle von SiCl-terminierten Siloxanen kann eine OH-terminierte organische Gruppe durch die dem Fachmann bekannte HClfreisetzende Kondensation angebracht werden. Der Inhalt dieser Schriften wird hiermit als Referenz eingeführt und gilt als Teil des Offenbarungsgehaltes der vorliegenden Anmeldung.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Ausführungsbeispiele:

### Allgemeines:

### Einsatzalkohole:

Im Falle der dehydrogenativen Kondensation werden die Polyetheralkohole zuvor durch eine Destillation im Vakuum von allen flüchtigen Bestandteilen befreit.

### Reaktionsführung:

Alle Reaktionen wurden unter Schutzgas ausgeführt. Im Falle der dehydrogenativen Kondensation entstand Wasserstoff, der über einen Blasenzähler abgeleitet wurde.

### Analysen:

Der Umsatz wurde durch die Bestimmung der Rest SiH-Funktionen mittels einer gasvolumetrischen Wasserstoffbestimmung [Umsatzangabe in %] ermittelt.

Die OH-Zahl wurde durch die Reaktion von Phthalsäureanydrid mit freien Hydroxygruppen ermittelt. Die freie Säure wurde mit einer Basenlösung zurücktitriert [OH-Zahl angegeben in mg KOH/g Prüfsubstanz].

Das Vorliegen der SiC- bzw. Si-O-C-Verknüpfung wurde jeweils durch eine ²⁹Si-NMR-spektroskopische Untersuchung (mit Bruker AVANCE 400 NMR-Spektrometer mit Auswertesoftware XWIN-NMR 3.1 und Tetramethylsilan als internem Standard) des Reaktionsprodukts belegt.

### Synthesen:

### Beispiel 1:

### Umsetzung mit OH-terminiertem, rein Ethylenoxid-Einheiten (EO) haltigem Polyether in einer Hydrosilylierungsreaktion

In einem 2 1-Einhalskolben, der mit einem Rührer ausgerüstet war, wurden 775 g eines α,ω-hydridterminierten Polydimethylsiloxans der mittleren Kettenlänge 9 Si, 724 g Hexamethyldisiloxan und 1,5 g Trifluormethansulfonsäure gemischt und bei Raumtemperatur 3 Tage gerührt. Anschließend wurden 30 g Natriumhydrogencarbonat zur Äquilibriermischung zugegeben, 2 h bei Raumtemperatur gerührt und filtriert. Es wurde ein Siloxanäquilibrat erhalten.

In einem 1 1-Dreihalskolben, der mit einem Rührer, einem Intensivkühler, einer Pilzheizhaube, einem Thermometer und einem Tropftrichter ausgerüstet war, wurden 142 g eines mit Allylalkohol gestarteten, rein EO-haltigen Polyethers (mittlere Molmasse von 200 g/mol) vorgelegt, auf 60°C aufgeheizt und mit Karstedt-Katalysator (Platin-Divinyltetramethyldisiloxan-Komplex der Firma ABCR) versetzt, so dass Platin im Ansatz in einer Konzentration von 5 ppm bezogen auf das Gesamtansatzgewicht vorlag. Innerhalb von 3 h 15 min wurden 381 g des oben hergestellten Siloxanäquilibrats zugetropft. Nach beendeter Reaktion wurde die Reaktionsmischung bei einer Temperatur von 130°C unter einem Membranpumpenvakuum von 6 mbar von flüchtigen Stoffen befreit. Es wurde eine klare, gelbe Flüssigkeit erhalten, welche durch die folgende statistische Formel beschrieben wird:

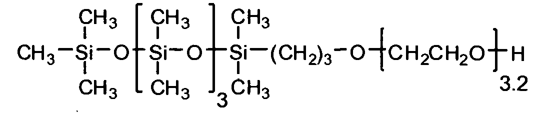

Dem Fachmann ist geläufig, dass die oben angegebene Formel eine idealisierte Strukturformel darstellt. Im Produkt liegen zusätzlich null- (Siliconöl) und difunktionelle (entsprechend der allgemeinen Formel III) Strukturen vor. Insbesondere sind die Siloxankette und die Polyetherkette längenverteilt. Die dargestellte Formel zeigt nur das Kettenlängenmittel.

### Beispiel 2:

### Umsetzung mit OH-terminiertem, Ethylenoxid-Einheiten (EO) und Propylenoxid-Einheiten (PO) haltigem Polyether in einer Hydrosilylierungsreaktion

In einem 2 1-Vierhalskolben, der mit einem Rührer ausgerüstet war, wurden 1039 g eines **α,ω-**hydridterminierten Polydimethylsiloxans der mittleren Kettenlänge 9 Si, 964 g Hexamethyldisiloxan und 2 g Trifluormethansulfonsäure gemischt und bei Raumtemperatur 24 h gerührt. Anschließend wurden 40 g Natriumhydrogencarbonat zur Äquilibriermischung zugegeben, 4 h bei Raumtemperatur gerührt und filtriert. Es wurde ein Siloxanäquilibrat erhalten.

In einem 1 1-Dreihalskolben, der mit einem Rührer, einem Intensivkühler, einer Pilzheizhaube, einem Thermometer und einem Tropftrichter ausgerüstet war, wurden 216 g eines mit Allylalkohol gestarteten, EO/PO-haltigen Polyethers (mittlere Molmasse von 600 g/mol, ca. 80% EO, 20% PO) vorgelegt, auf 90°C aufgeheizt und mit Karstedt-Katalysator (Platin-Divinyltetramethyldisiloxan-Komplex der Firma ABCR) versetzt, so dass Platin im Ansatz in einer Konzentration von 5 ppm bezogen auf das Gesamtansatzgewicht vorlag. Innerhalb von 100 min wurden 207 g des zuvor hergestellten Siloxanäquilibrats zugetropft. Anschließend wurden weitere 10 g des Polyethers zugegeben und 1 h lang bei 90 °C die Reaktion vervollständigt. Nach beendeter Reaktion wurde die Reaktionsmischung zunächst bei einer Temperatur von bis zu 150 °C unter einem Membranpumpenvakuum von 20-30 mbar, dann bei 150 °C unter einem Ölpumpenvakuum bei 5 mbar und anschließend am Dünnschichtverdampfer bei 150 °C von flüchtigen Stoffen befreit.

### Beispiel 3:

### Umsetzung mit OH-terminiertem, Ethylenoxid-Einheiten (EO) und Propylenoxid-Einheiten (PO) haltigem Polyether in einer Hydrosilylierungsreaktion

In einem 2 1-Einhalskolben, der mit einem Rührer ausgerüstet war, wurden 775 g eines **α,ω-**hydridterminierten Polydimethylsiloxans der mittleren Kettenlänge 9 Si, 724 g Hexamethyldisiloxan und 1,5 g Trifluormethansulfonsäure gemischt und bei Raumtemperatur über Nacht gerührt. Anschließend wurden 30 g Natriumhydrogencarbonat zur Äquilibriermischung zugegeben, 2 h bei Raumtemperatur gerührt und filtriert. Es wurde ein Siloxanäquilibrat erhalten.

In einem 1 1-Dreihalskolben, der mit einem Rührer, einem Intensivkühler, einer Pilzheizhaube, einem Thermometer und einem Tropftrichter ausgerüstet war, wurden 235 g eines mit Allylalkohol gestarteten, EO/PO-haltigen Polyethers (mittlere Molmasse von 900 g/mol, ca. 70% EO, 30% PO) vorgelegt, auf 90 °C aufgeheizt und mit Karstedt-Katalysator (Platin-Divinyltetramethyldisiloxan-Komplex der Firma ABCR) versetzt, so dass Platin im Ansatz in einer Konzentration von 5 ppm bezogen auf das Gesamtansatzgewicht vorlag. Innerhalb von 100 min wurden 139 g des zuvor hergestellten Siloxanäquilibrats zugetropft. Nach beendeter Reaktion wurde die Reaktionsmischung zunächst bei einer Temperatur von bis zu 150 °C unter einem Membranpumpenvakuum von 20-30 mbar, dann bei 150 °C unter einem Ölpumpenvakuum bei 5 mbar und anschließend am Dünnschichtverdampfer bei 150 °C von flüchtigen Stoffen befreit.

### Beispiel 4:

### Umsetzung mit OH-terminiertem, Ethylenoxid-Einheiten (EO) und Propylenoxid-Einheiten (PO) haltigem Polyether in einer Hydrosilylierungsreaktion

In einem 2 1-Einhalskolben, der mit einem Rührer ausgerüstet war, wurden 775 g eines **α,ω-**hydridterminierten Polydimethylsiloxans der mittleren Kettenlänge 9 Si, 724 g Hexamethyldisiloxan und 1,5 g Trifluormethansulfonsäure gemischt und bei Raumtemperatur über Nacht gerührt. Anschließend wurden 30 g Natriumhydrogencarbonat zur Äquilibriermischung zugegeben, 2 h bei Raumtemperatur gerührt und filtriert. Es wurde ein Siloxanäquilibrat erhalten.

In einem 1 1-Dreihalskolben, der mit einem Rührer, einem Intensivkühler, einer Pilzheizhaube, einem Thermometer und einem Tropftrichter ausgerüstet war, wurden 318 g eines mit Allylalkohol gestarteten, EO/PO-haltigen Polyethers (mittlere Molmasse von 1500 g/mol, ca. 60% EO, 40% PO) vorgelegt, auf 90 °C aufgeheizt und mit Karstedt-Katalysator (Platin-Divinyltetramethyldisiloxan-Komplex der Firma ABCR) versetzt, so dass Platin im Ansatz in einer Konzentration von 5 ppm bezogen auf das Gesamtansatzgewicht vorlag. Innerhalb von 1 h wurden 110 g des zuvor hergestellten Siloxanäquilibrats zugetropft. Nach beendeter Reaktion wurde die Reaktionsmischung zunächst bei einer Temperatur von bis zu 150 °C unter einem Membranpumpenvakuum von 20-30 mbar, dann bei 150 °C unter einem Ölpumpenvakuum bei 5 mbar und anschließend am Dünnschichtverdampfer bei 150 °C von flüchtigen Stoffen befreit.

### Beispiel 5:

### Umsetzung mit Methyl-Endverkapptem, rein Ethylenoxid-Einheiten (EO) haltigem Polyether in einer Hydrosilylierungsreaktion

In einem 2 1-Vierhalskolben, der mit einem Rührer ausgerüstet war, wurden 1039 g eines **α,ω-**hydridterminierten Polydimethylsiloxans der mittleren Kettenlänge 9 Si, 964 g Hexamethyldisiloxan und 2 g Trifluormethansulfonsäure gemischt und bei Raumtemperatur 24 h gerührt. Anschließend wurden 40 g Natriumhydrogencarbonat zur Äquilibriermischung zugegeben, 4 h bei Raumtemperatur gerührt und filtriert. Es wurde ein Siloxanäquilibrat erhalten.

In einem 1 1-Dreihalskolben, der mit einem Rührer, einem Intensivkühler, einer Pilzheizhaube, einem Thermometer und einem Tropftrichter ausgerüstet war, wurden 126 g eines mit Allylalkohol gestarteten, EO-haltigen Polyethers mit Methyl-Endverkappung (mittlere Molmasse von 200 g/mol) vorgelegt, auf 90 °C aufgeheizt und mit Karstedt-Katalysator (Platin-Divinyltetramethyldisiloxan-Komplex der Firma ABCR) versetzt, so dass Platin im Ansatz in einer Konzentration von 5 ppm bezogen auf das Gesamtansatzgewicht vorlag. Innerhalb von 2 h wurden 349 g des zuvor hergestellten Siloxanäquilibrats zugetropft. Anschließend wurden weitere 19 g des Polyethers zugegeben und 3 h lang bei 90 °C die Reaktion vervollständigt. Nach beendeter Reaktion wurde die Reaktionsmischung zunächst bei einer Temperatur von bis zu 150 °C unter einem Membranpumpenvakuum von 20-30 mbar, dann bei 150 °C unter einem Ölpumpenvakuum bei 4 mbar und anschließend am Dünnschichtverdampfer bei 150 °C von flüchtigen Stoffen befreit.

### Beispiel 6:

### Umsetzung mit Methyl-endverkapptem, rein Ethylenoxid-Einheiten (EO) haltigem Polyether in einer Hydrosilylierungsreaktion

In einem 2 1-Vierhalskolben, der mit einem Rührer ausgerüstet war, wurden 1039 g eines α,ω-hydridterminierten Polydimethylsiloxans der mittleren Kettenlänge 9 Si, 964 g Hexamethyldisiloxan und 2 g Trifluormethansulfonsäure gemischt und bei Raumtemperatur 24 h gerührt. Anschließend wurden 40 g Natriumhydrogencarbonat zur Äquilibriermischung zugegeben, 4 h bei Raumtemperatur gerührt und filtriert. Es wurde ein Siloxanäquilibrat erhalten.

In einem 500 ml-Dreihalskolben, der mit einem Rührer, einem Intensivkühler, einer Pilzheizhaube, einem Thermometer und einem Tropftrichter ausgerüstet war, wurden 177 g eines mit Allylalkohol gestarteten, EO-haltigen Polyethers mit Methyl-Endverkappung (mittlere Molmasse von 400 g/mol) vorgelegt, auf 90 °C aufgeheizt und mit Karstedt-Katalysator (Platin-Divinyltetramethyldisiloxan-Komplex der Firma ABCR) versetzt, so dass Platin im Ansatz in einer Konzentration von 5 ppm bezogen auf das Gesamtansatzgewicht vorlag. Innerhalb von 2 h wurden 278 g des zuvor hergestellten Siloxanäquilibrats zugetropft. Anschließend wurden weitere 19 g des Polyethers zugegeben und 2 h lang bei 90 °C die Reaktion vervollständigt. Nach beendeter Reaktion wurde die Reaktionsmischung zunächst bei einer Temperatur von bis zu 150 °C unter einem Membranpumpenvakuum von 30 mbar, dann bei 150 °C unter einem Ölpumpenvakuum bei 4 mbar und anschließend am Dünnschichtverdampfer bei 150 °C von flüchtigen Stoffen befreit.

### Beispiel 7:

### Umsetzung mit Methyl-endverkapptem, Ethylenoxid-Einheiten (EO) und Propylenoxid-Einheiten (PO) haltigem Polyether in einer Hydrosilylierungsreaktion

In einem 2 1-Vierhalskolben, der mit einem Rührer ausgerüstet war, wurden 1039 g eines **α,ω-**hydridterminierten Polydimethylsiloxans der mittleren Kettenlänge 9 Si, 964 g Hexamethyldisiloxan und 2 g Trifluormethansulfonsäure gemischt und bei Raumtemperatur 24 h gerührt. Anschließend wurden 40 g Natriumhydrogencarbonat zur Äquilibriermischung zugegeben, 4 h bei Raumtemperatur gerührt und filtriert. Es wurde ein Siloxanäquilibrat erhalten.

In einem 500 ml-Dreihalskolben, der mit einem Rührer, einem Intensivkühler, einer Pilzheizhaube, einem Thermometer und einem Tropftrichter ausgerüstet war, wurden 238 g eines mit Allylalkohol gestarteten, EO/PO-haltigen Polyethers mit Methyl-Endverkappung (mittlere Molmasse von 900 g/mol, 70% EO, 30% PO) vorgelegt, auf 90 °C aufgeheizt und mit Karstedt-Katalysator (Platin-Divinyltetramethyldisiloxan-Komplex der Firma ABCR) versetzt, so dass Platin im Ansatz in einer Konzentration von 5 ppm bezogen auf das Gesamtansatzgewicht vorlag. Innerhalb von 1 h wurden 164 g des zuvor hergestellten Siloxanäquilibrats zugetropft. Anschließend wurden weitere 11 g des Polyethers zugegeben und 2 h lang bei 90 °C die Reaktion vervollständigt. Nach beendeter Reaktion wurde die Reaktionsmischung zunächst bei einer Temperatur von bis zu 150 °C unter einem Membranpumpenvakuum von 20-30 mbar, dann bei 150 °C unter einem Ölpumpenvakuum bei 5 mbar und anschließend am Dünnschichtverdampfer bei 150 °C von flüchtigen Stoffen befreit.

### Beispiel 8:

### Umsetzung mit Methyl-endverkapptem, Ethylenoxid-Einheiten (EO) und Propylenoxid-Einheiten (PO) haltigem Polyether in einer Hydrosilylierungsreaktion

In einem 2 1-Einhalskolben, der mit einem Rührer ausgerüstet war, wurden 775 g eines **α,ω-**hydridterminierten Polydimethylsiloxans der mittleren Kettenlänge 9 Si, 724 g Hexamethyldisiloxan und 1,5 g Trifluormethansulfonsäure gemischt und bei Raumtemperatur über Nacht gerührt. Anschließend wurden 30 g Natriumhydrogencarbonat zur Äquilibriermischung zugegeben, 2 h bei Raumtemperatur gerührt und filtriert. Es wurde ein Siloxanäquilibrat erhalten.

In einem 500 ml-Dreihalskolben, der mit einem Rührer, einem Intensivkühler, einer Pilzheizhaube, einem Thermometer und einem Tropftrichter ausgerüstet war, wurden 263 g eines mit Allylalkohol gestarteten, EO/PO-haltigen Polyethers mit Methyl-Endverkappung (mittlere Molmasse von 1500 g/mol, 40% EO, 60% PO) vorgelegt, auf 90 °C aufgeheizt und mit Karstedt-Katalysator (Platin-Divinyltetramethyldisiloxan-Komplex der Firma ABCR) versetzt, so dass Platin im Ansatz in einer Konzentration von 5 ppm bezogen auf das Gesamtansatzgewicht vorlag. Innerhalb von 1 h 20 min wurden 95 g des zuvor hergestellten Siloxanäquilibrats zugetropft. Nach beendeter Reaktion wurde die Reaktionsmischung zunächst bei einer Temperatur von bis zu 150°C unter einem Membranpumpenvakuum von 20-50 mbar, dann bei 150 °C unter einem Ölpumpenvakuum bei 5 mbar und anschließend am Dünnschichtverdampfer bei 150 °C von flüchtigen Stoffen befreit.

### Beispiel 9:

### Umsetzung mit sulfopropyliertem, rein Ethylenoxid-Einheiten (EO) haltigem Polyether in einer Hydrosilylierungsreaktion

In einem 2 1-Einhalskolben, der mit einem Rührer ausgerüstet war, wurden 775 g eines **α,ω-**hydridterminierten Polydimethylsiloxans der mittleren Kettenlänge 9 Si, 724 g Hexamethyldisiloxan und 1,5 g Trifluormethansulfonsäure gemischt und bei Raumtemperatur über Nacht gerührt. Anschließend wurden 30 g Natriumhydrogencarbonat zur Äquilibriermischung zugegeben, 2 h bei Raumtemperatur gerührt und filtriert. Es wurde ein Siloxanäquilibrat erhalten.

Das Produkt RALU®MER SPPE der Fa. Raschig (Polyethylenglycolallyl(3-sulfopropyl)diether Kaliumsalz) wurde vor den folgenden Umsetzungen durch Azeotropieren mit Toluol getrocknet. Dabei wurde eine ca. 73 Gew.-%ige Lösung des anionischen Polyethers in Toluol erhalten. Der Polyethergehalt wurde über die dem Fachmann bekannte Iodzahl bestimmt. In einem 500 ml-Dreihalskolben, der mit einem Rührer, einem Intensivkühler, einer Pilzheizhaube, einem Thermometer und einem Tropftrichter ausgerüstet war, wurden 265 g der aus der oben beschriebenen Trocknung erhaltenen Lösung des anionischen Polyethers in Toluol vorgelegt, auf 70 °C aufgeheizt und mit Karstedt-Katalysator (Platin-Divinyltetramethyldisiloxan-Komplex der Firma ABCR) versetzt, so dass Platin im Ansatz in einer Konzentration von 5 ppm bezogen auf das Gesamtansatzgewicht vorlag. Innerhalb von 1,5 h wurden 166 g des zuvor hergestellten Siloxanäquilibrats zugetropft. Nach beendeter Reaktion wurde die Reaktionsmischung zunächst bei einer Temperatur von bis zu 130 °C unter einem Membranpumpenvakuum von 20 mbar, dann bei 130 °C unter einem Ölpumpenvakuum bei 6 mbar von flüchtigen Stoffen befreit.

### Beispiel 10:

### Umsetzung mit Alkinen in einer Hydrosilylierungsreaktion

In einem 2 1-Vierhalskolben, der mit einem Rührer ausgerüstet war, wurden 1039 g eines **α,ω-**hydridterminierten Polydimethylsiloxans der mittleren Kettenlänge 9 Si, 964 g Hexamethyldisiloxan und 2 g Trifluormethansulfonsäure gemischt und bei Raumtemperatur 24 h gerührt. Anschließend wurden 40 g Natriumhydrogencarbonat zur Äquilibriermischung zugegeben, 4 h bei Raumtemperatur gerührt und filtriert. Es wurde ein Siloxanäquilibrat erhalten.

In einem 1 1-Dreihalskolben, der mit einem Rührer, einem Intensivkühler, einer Pilzheizhaube, einem Thermometer und einem Tropftrichter ausgerüstet war, wurden 101 g Golpanol® BEO (BASF, Butindiol verethert mit ca. 2,2 mol Ethylenoxid, mittlere Molmasse von 183 g/mol), auf 150 °C aufgeheizt und mit einer Lösung von H₂PtCl₆*6H₂O und RuCl₃*H₂O (der Firma Strem) in Isopropanol versetzt, so dass Platin im Ansatz in einer Konzentration von 10 ppm bezogen auf das Gesamtansatzgewicht und Ruthenium im Ansatz in einer Konzentration von 10 ppm bezogen auf das Gesamtansatzgewicht vorlagen. Innerhalb von 5 h wurden 360 g des zuvor hergestellten Siloxanäquilibrats zugetropft. Nach beendeter Reaktion wurde die Reaktionsmischung zunächst bei einer Temperatur von 150 °C unter einem Membranpumpenvakuum von 50 mbar und anschließend bei 150 °C unter einem Ölpumpenvakuum bei 6 mbar von flüchtigen Stoffen befreit.

### Beispiel 11:

### Umsetzung mit OH-terminiertem, rein Propylenoxid-Einheiten (PO) haltigem Polyether in einer dehydrogenativen Kondensation

In einem 2 1-Einhalskolben, der mit einem Rührer ausgerüstet war, wurden 561 g eines **α,ω-**hydridterminierten Polydimethylsiloxans der mittleren Kettenlänge 9 Si, 514 g Hexamethyldisiloxan, 425 g Decamethylcyclopentasiloxan und 1,5 g Trifluormethansulfonsäure gemischt und bei Raumtemperatur 24 h gerührt. Anschließend wurden 30 g Natriumhydrogencarbonat zur Äquilibriermischung zugegeben, 4 h bei Raumtemperatur gerührt und filtriert. Es wurde ein Siloxanäquilibrat erhalten.

In einem 2 1-Dreihalskolben, der mit einem Rührer, einem Intensivkühler, einer Pilzheizhaube, einem Thermometer und einem Tropftrichter ausgerüstet war, wurden 1057 g eines mit Butanol gestarteten, rein PO-haltigen Polyethers (mittlere Molmasse von 1800 g/mol) vorgelegt, auf 90 °C aufgeheizt und mit 770 mg Tris(perfluortriphenyl)boran versetzt. Innerhalb von 2 h wurden 475 g des zuvor hergestellten Siloxanäquilibrats bei 100 °C zugetropft. Hierbei entstand ein Gas, welches kontrolliert abgeleitet wurde. Nach beendeter Reaktion wurde die Reaktionsmischung zunächst bei einer Temperatur von 146 °C unter einem Ölpumpenvakuum bei 2 mbar und anschließend am Dünnschichtverdampfer bei 150 °C von flüchtigen Stoffen befreit.

### Vergleichsbeispiel 1:

Nach der in DE 43 17 605 beschriebenen Methoden wurde ein 1,1,1,2,3,3,3-Heptamethyltrisiloxan mit einem Allylalkohol gestarteten Polyether mit einem PO-Gehalt von 30% und EO-Gehalt von 70% und einer mittleren Molmasse von 900 g/mol mit einem geeigneten Pt-Katalysator zum entsprechenden Polyethersiloxan umgesetzt:

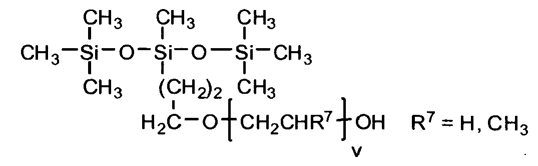

### Beispiele 12 bis 22:

### Herstellung von Polyesterpolyurethan-Weichschaum

Rohstoffe: Desmophen 2200 von Bayer, Toluylendiisocyanat (TDI 80/20) von Bayer, N-Methylmorpholin (NMM).

Formulierung: 100 Teile Polyesterpolyol, 56,5 Teile TDI 80, 5,1 Teile Wasser, 1,4 Teile NMM, 0,13 oder 0,26 Teile Siloxan.

Hierbei wurde aus Wasser, Amin und Siloxan eine Aktivatorlösung hergestellt unter Zugabe von 0,6 Teilen eines Polyethers mit 90% PO und 10% EO und einer mittleren Molmasse von 2000 g/mol als Lösungsvermittler und 0,6 Teilen eines Polyoxyethylen Sorbitol Oleat-Laurat (Handelsname: TEGO PEG 30 Tol).

Die Verschäumung wurde auf einer Hochdruckmaschine der Firma Hennecke, Modell UBT, mit einem Ausstoß von 4 kg/min vorgenommen. Es wurden das Polyol, die Isocyanate und die Aktivatorlösung getrennt dosiert. Das Reaktionsgemisch wurde in einen mit Papier ausgekleideten Behälter mit einer Grundfläche von 30 x 30 cm dosiert. Man bestimmte die Steighöhe und den Rückfall. Als Rückfall wurde die Abnahme der Steighöhe 1 Minute nach Erreichen der maximalen Steighöhe bezeichnet.

Nach Aushärten der Schäume wurden die Zellenzahl und die Luftdurchlässigkeit bestimmt. Die Luftdurchlässigkeit ist ein Maß für den Anteil an offenen Zellen im Schaum. Für viele Anwendungen wird ein möglichst offenzelliger Schaum gewünscht. Die Offenzelligkeit der Schäume wurde über die Luftdurchlässigkeit bestimmt. Die Luftdurchlässigkeit ist angegeben in mm Staudruck Wassersäule, welcher sich aufbaut, wenn ein konstanter Luftstrom von 480 1/h durch den Schaum geleitet wird. Je höher der angegebene Wert, desto geschlossenzelliger ist der Schaum und umgekehrt.

In der folgenden Tabelle 1 sind die Ergebnisse der Verschäumungen von Siloxanen der allgemeinen Formel (I) (Beispiele 12-22) und von einem nicht erfindungsgemäßen Siloxan des Standes der Technik (Vergleichsbeispiele 2 und 3) zusammengefasst. Es werden das Siloxan, die verwendete Menge (in Teilen), die Schaumhöhe (cm), der Rückfall (cm), die Luftdurchlässigkeit (mm) und die Zellenzahl (cm⁻¹)der erhaltenen Schäume dargestellt.

**Tabelle 1: Ergebnisse der Verschäumungsversuche**

| | Siloxanaus | Menge (Teile) | Schaumhhöhe (cm) | Rückfall (cm) | Luftd. (mm) | Zellenzahl (cm⁻¹) | Bemerkungen |
|---|---|---|---|---|---|---|---|
| Bsp 12 | Bsp. 1 | 0,13 | -- | 1,1 | 33 | 13,7 | fehlerfrei |
| Bsp 13 | Bsp. 2 | 0,13 | 29,2 | 0,5 | 17 | 12,9 | fehlerfrei |
| Bsp 14 | Bsp. 3 | 0,13 | 28,9 | 0,4 | 15 | 11,6 | gröber |
| Bsp 15 | Bsp. 4 | 0,13 | 29,2 | 1,3 | 16 | 13,9 | fehlerfrei |
| Bsp 16 | Bsp. 5 | 0,13 | 28,6 | 3,1 | 44 | 14,5 | fehlerfrei |
| Bsp 17 | Bsp. 6 | 0,13 | 29,5 | 1,5 | 20 | 13,9 | fehlerfrei |
| Bsp 18 | Bsp. 7 | 0,13 | 29,3 | 1,1 | 17 | 13,3 | fehlerfrei |
| Bsp 19 | Bsp. 8 | 0,13 | 29,7 | 1,4 | 7 | 13,3 | fehlerfrei |
| Bsp 20 | Bsp. 9 | 0,13 | 28,8 | 2,5 | 53 | 12,5 | fehlerfrei |
| Bsp 21 | Bsp. 10 | 0,13 | 29,3 | 1,6 | 52 | 14,7 | fehlerfrei |
| Bsp 22 | Bsp. 6 | 0,12 | 29,6 | 1,1 | 30 | 14,3 | fehlerfrei |
| Vgl 2 | Vgl. 1 | 0,39 | 28,7 | 2,6 | 12 | 12 | Risse |
| Vgl 3 | Vgl. 1 | 0,13 | - | - | - | - | Kollaps |

Wie an Hand der in der Tabelle dokumentierten Ergebnisse leicht zu erkennen ist, werden bei der Verwendung von erfindungsgemäßen Zusammensetzungen bei der Herstellung von Polyesterpolyurethan-Weichschäumen fehlerfreie Schäume erhalten.

## Patentansprüche

1. Verwendung einer Zusammensetzung enthaltend zumindest eine Verbindung der allgemeinen Formel (I) 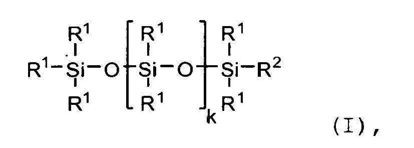 wobei
R¹ gleiche oder verschiedene, geradkettige oder verzweigte, aliphatische oder aromatische, gegebenenfalls halogenierte, gegebenenfalls ungesättigte Kohlenwasserstoffreste mit 1 bis 8 Kohlenstoffatomen sind,
k = 0 bis 10,
R² eine Gruppe der Formel A-B-D-Q darstellt, wobei
A ein Sauerstoffatom, eine CH₂-Gruppe oder eine CH=CH-Gruppe ist,
B eine CH₂-Gruppe oder ein zweiwertiger Rest, ausgewählt aus linearen oder verzweigten, gesättigten, ein- oder mehrfach ungesättigten Alkyl-, Aryl-, Alkylaryl- oder Arylalkyl- Oxygruppen mit 2 bis 20 Kohlenstoffatomen oder eine Gruppe der Formel -CH₂-O-(CH₂)₄-O- ist,
D eine Gruppe der allgemeinen Formel (II)
- (C₂H₄O)ₙ(C₃H₆O)ₒ(C₁₂H₂₄O)ₚ(C₈H₈O)_{q}(C₄H₈O)ᵣ- (II)
ist, mit
n, o, p, q und r voneinander unabhängige ganze Zahlen von 0 bis 50, wobei die Summe der Indizes n + o + p + q + r größer oder gleich 3 ist und die allgemeine Formel II ein statistisches Oligomer oder ein Blockoligomer darstellt, und
Q ein Rest, ausgewählt aus Wasserstoff, linearen oder verzweigten, gesättigten, ein- oder mehrfach ungesättigten, Alkyl-, Aryl-, Alkylaryl- oder Arylalkylgruppen mit 1 bis 20 Kohlenstoffatomen, gegebenenfalls ein oder mehrere Heteroatome enthaltend, gegebenenfalls ein oder mehrere Carbonylgruppen enthaltend, gegebenenfalls mit einer ionischen organischen Gruppe modifiziert,
bei der Herstellung von Polyesterpolyurethanschäumen.

2. Verwendung gemäß Anspruch 1 **dadurch gekennzeichnet, dass** der Rest R¹ der allgemeinen Formel (I) für Methylgruppen steht, p = q = r = 0 ist, die Summe der Indizes n + o größer oder gleich 3 ist und Q ausgewählt ist aus der Gruppe umfassend Wasserstoff und
| | |
|---|---|
| -CH₃ | 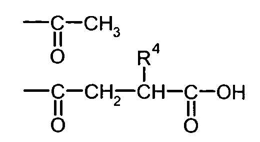 |
| -(CH₂)₃-CH₃ | |
| -CH₂CH=CH₂ | |
| -SO₃H | 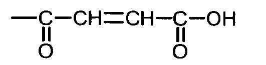 |
| -O₃^{- 1}/_{w} M^{w+} | |
| -(CH₂)₂-SO₃^{- 1}/_{w} M^{w+} | 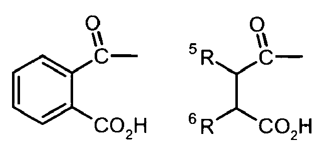 |
| -(CH₂)₃ SO₃^{- 1}/_{w} M^{w+} | |
| -(CH₂)₄-SO₃^{- 1}/_{w} M^{w+} | |
| -PO₃^{2- 2}/_{w} M^{w+} | 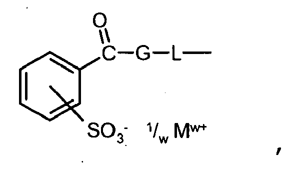 |
| -PO₃H^{- 1}/_{w} M^{w+} | |
| -PO₃H₂ | |
wobei
M^{w+} für ein w-wertiges Kation mit w = 1, 2, 3, oder 4 steht,
und
R⁴ für Wasserstoff oder einen, aliphatischen Rest mit 1 bis 20 Kohlenstoffatomen steht,
R⁵ und R⁶ für gleiche oder verschiedene aliphatische Reste stehen,
G ein Sauerstoffatom, NH oder eine NR⁷ Gruppe ist, wobei R⁷ eine einwertige Alkylgruppe ist und
L einen zweiwertigen, verzweigten oder unver- zweigten, gegebenenfalls Sauerstoff und/oder Stickstoff enthaltenden Alkylrest,
darstellt.

3. Verwendung gemäß Anspruch 1 oder 2, **dadurch gekennzeichnet, dass** der Rest R¹ der allgemeinen Formel (I) ausschließlich für Methylgruppen steht, p = q = r = 0 ist, die Summe der Indizes n + o größer oder gleich 3 ist, und Q ausgewählt ist aus der Gruppe umfassend Wasserstoff, Acetyl-, Methyl-, Ethyl-, Butyl- und Allylreste.

4. Verwendung gemäß zumindest einem der Ansprüche 1 bis 3, **dadurch gekennzeichnet, dass** der Rest A für eine CH₂-Gruppe steht.

5. Verwendung gemäß zumindest einem der Ansprüche 1 bis 3, **dadurch gekennzeichnet, dass** der Rest A für ein Sauerstoffatom steht.

6. Verwendung gemäß zumindest einem der Ansprüche 1 bis 5, **dadurch gekennzeichnet, dass** die Zusammensetzung eine oder mehrere difunktionelle Verbindungen der allgemeinen Formel (III) 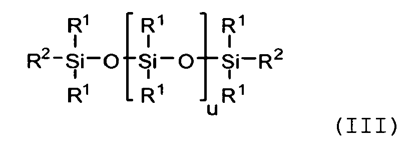 aufweist, wobei die Reste wie oben definiert sind und u = 0 bis 20 ist.

7. Verwendung nach Anspruch 6, **dadurch gekennzeichnet, dass** das molare Verhältnis der difunktionellen Verbindungen der Formel (III) zu monofunktionellen Verbindungen der Formel (I) kleiner oder gleich 1/3 beträgt.

8. Verwendung nach Anspruch 7, **dadurch gekennzeichnet, dass** das molare Verhältnis der difunktionellen Verbindungen der Formel (III) zu monofunktionellen Verbindungen der Formel (I) kleiner oder gleich 0,2 beträgt.

9. Verwendung nach zumindest einem der Ansprüche 1 bis 8, **dadurch gekennzeichnet, dass** der Anteil der Verbindung der allgemeinen Formel (I) an der zu verschäumenden Mischung von 0,05 bis 1 Massen-% beträgt.

10. Verfahren zur Herstellung einer Zusammensetzung enthaltend Verbindungen der allgemeinen Formel (I) wie in Anspruch 1 definiert, **dadurch gekennzeichnet, dass** es die Verfahrensschritte
a) Äquilibrieren einer Mischung enthaltend R¹₃SiO_{1/2}-Gruppen und R¹₂SiO_{2/2}-Gruppen haltige Siloxane und HSiR¹₂O_{1/2}-Gruppen und R¹₂SiO_{2/2}-Gruppen haltige Siloxane und gegebenenfalls Cyclosiloxane, wobei das molare Verhältnis von R¹₃SiO_{1/2}-Gruppen zu HSiR¹₂O_{1/2}-Gruppen von 1:4 bis 9:1 beträgt,
b) Umsetzen der Äquilibriermischung mit einer Verbindung A'-B-D-Q mit A' = eine OH-Gruppe, eine Vinyl-Gruppe oder eine Ethinyl-Gruppe und B, D und Q wie in Anspruch 1 definiert,
aufweist.

11. Verfahren gemäß Anspruch 10, **dadurch gekennzeichnet, dass** anschließend an Verfahrensschritt b) in einem Verfahrensschritt c) Verbindungen der allgemeinen Formel (IV) 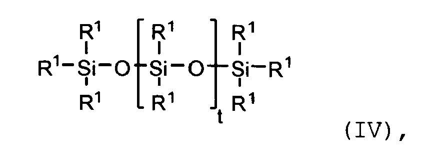 mit R¹ wie in Anspruch 1 definiert, und t = 0 bis 20 vollständig oder teilweise destillativ entfernt werden.

12. Verfahren gemäß Anspruch 10 oder 11, **dadurch gekennzeichnet, dass** in Verfahrensschritt a) die Siloxane in einem Verhältnis eingesetzt werden, so dass das molare Verhältnis von R¹₃SiO_{1/2}-Gruppen zu HSiR¹₂O_{1/2}-Gruppen von 1:1 bis 6:1 beträgt.

13. Verfahren gemäß Anspruch 12, **dadurch gekennzeichnet, dass** in Verfahrensschritt a) die Siloxane in einem Verhältnis eingesetzt werden, so dass das molare Verhältnis von R¹₃SiO_{1/2}-Gruppen zu HSiR¹₂O_{1/2}-Gruppen von 5:2 bis 4:1 beträgt.

14. Verfahren gemäß zumindest einem der Ansprüche 10 bis 13, **dadurch gekennzeichnet, dass** zur Umsetzung in Verfahrensschritt b) eine Hydrosilylierungsreaktion durchgeführt wird.

15. Verfahren gemäß zumindest einem der Ansprüche 10 bis 13, **dadurch gekennzeichnet, dass** zur Umsetzung in Verfahrensschritt b) eine dehydrogenativen Kondensation durchgeführt wird.

## Claims

1. Use of a composition comprising at least one compound of the general formula (I) 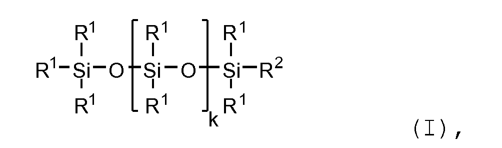 where
R¹ are identical or different, straight-chain or branched, aliphatic or aromatic, optionally halogenated, optionally unsaturated hydrocarbon radicals having 1 to 8 carbon atoms,
k = 0 to 10,
R² is a group of the formula A-B-D-Q, where
A is an oxygen atom, a CH₂ group or a CH=CH group,
B is a CH₂ group or a divalent radical selected from linear or branched, saturated, mono- or polyunsaturated alkyloxy, aryloxy, alkylaryloxy or arylalkyloxy groups having 2 to 20 carbon atoms or a group of the formula -CH₂-O- (CH₂)₄-O-,
D is a group of the general formula (II)
-(C₂H₄O)ₙ(C₃H₆O)ₒ(C₁₂H₂₄O)ₚ(CaHaO)_{q}(C₄H₈O)ᵣ- (II)
where
n, o, p, q and r are mutually independent integers from 0 to 50, where the sum of the indices n + o + p + q + r is greater than or equal to 3 and the general formula II represents a statistical oligomer or a block oligomer, and
Q is a radical selected from hydrogen, linear or branched, saturated, mono- or poly- unsaturated alkyl, aryl, alkylaryl or arylalkyl groups having 1 to 20 carbon atoms, optionally containing one or more heteroatoms, optionally containing one or more carbonyl groups, optionally modified with an ionic organic group,
in the production of polyester polyurethane foams.

2. Use according to Claim 1, **characterized in that** the radical R¹ of the general formula (I) represents methyl groups, p = q = r = 0, the sum of the indices n + o is greater than or equal to 3 and Q is selected from the groups comprising hydrogen and
| | |
|---|---|
| -CH₃ | 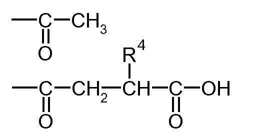 |
| -(CH₂)₃-CH₃ | |
| -CH₂ CH=CH₂ | |
| -SO₃H | 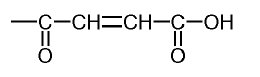 |
| -SO₃^{- 1}/_{w} M^{w+} | |
| -(CH₂)₂-SO₃^{- 1}/_{w} M^{w+} | 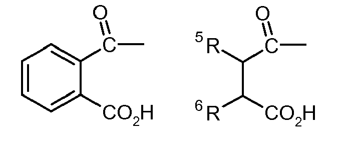 |
| -(CH₂)₃ SO₃^{- 1}/_{w} M^{w+} | |
| -(CH₂)₄-SO₃^{- 1}/_{w} M^{w+} | |
| -PO₃^{2- 2}/_{w} M^{w+} | 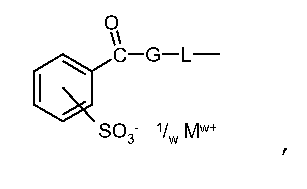 |
| -PO₃H^{- 1}/_{w} M^{w+} | |
| -PO₃H₂ | |
where
M^{w+} is a w-valent cation where w = 1, 2, 3 or 4,
and
R⁴ is hydrogen or an aliphatic radical having 1 to 20 carbon atoms,
R⁵ and R⁶ are identical or different aliphatic radicals,
G is an oxygen atom, NH or an NR⁷ group, where R⁷ is a monovalent alkyl group, and
L is a divalent, branched or unbranched alkyl radical optionally containing oxygen and/or nitrogen.

3. Use according to Claim 1 or 2, **characterized in that** the radical R¹ of the general formula (I) represents exclusively methyl groups, p = q = r = 0, the sum of the indices n + o is greater than or equal to 3, and Q is selected from the group comprising hydrogen, acetyl, methyl, ethyl, butyl and allyl radicals.

4. Use according to at least one of Claims 1 to 3, **characterized in that** the radical A is a CH₂ group.

5. Use according to at least one of Claims 1 to 3, **characterized in that** the radical A is an oxygen atom.

6. Use according to at least one of Claims 1 to 5, **characterized in that** the composition has one or more difunctional compounds of the general formula (III) 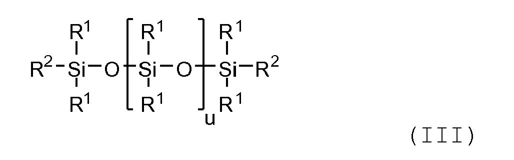 where the radicals are as defined above and u = 0 to 20.

7. Use according to Claim 6, **characterized in that** the molar ratio of the difunctional compounds of the formula (III) to monofunctional compounds of the formula (I) is less than or equal to 1/3.

8. Use according to Claim 7, **characterized in that** the molar ratio of the difunctional compounds of the formula (III) to monofunctional compounds of the formula (I) is less than or equal to 0.2.

9. Use according to at least one of Claims 1 to 8, **characterized in that** the fraction of the compound of the general formula (I) in the mixture to be foamed is from 0.05 to 1 mass%.

10. Process for the preparation of a composition comprising compounds of the general formula (I) as defined in Claim 1, **characterized in that** it has the process steps
a) equilibration of a mixture comprising R¹₃SiO_{1/2}-group- and R¹₂ SiO_{2/2}-group-containing siloxanes and HSiR¹₂O_{1/2}-group- and R¹₂SiO_{2/2}-group-containing siloxanes and optionally cyclosiloxanes, where the molar ratio of R¹₃SiO_{1/2} groups to HSiR¹₂O_{1/2} groups is from 1:4 to 9:1,
b) reaction of the equilibration mixture with a compound A'-B-D-Q where A' = an OH group, a vinyl group or an ethynyl group and B, D and Q are as defined in Claim 1.

11. Process according to Claim 10, **characterized in that** following process step b), in a process step c), compounds of the general formula (IV) 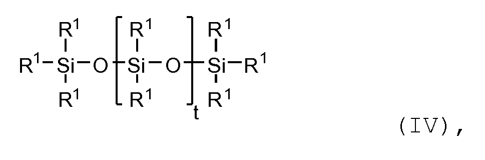 where R¹ is as defined in Claim 1 and t = 0 to 20 are completely or partially removed by distillation.

12. Process according to Claim 10 or 11, **characterized in that**, in process step a), the siloxanes are used in a ratio such that the molar ratio of R¹₃SiO_{1/2} groups to HSiR¹₂O_{1/2} groups is from 1:1 to 6:1.

13. Process according to Claim 12, **characterized in that**, in process step a), the siloxanes are used in a ratio such that the molar ratio of R¹₃SiO_{1/2} groups to HSiR¹₂O_{1/2} groups is from 5:2 to 4:1.

14. Process according to at least one of Claims 10 to 13, **characterized in that**, for the reaction in process step b), a hydrosilylation reaction is carried out.

15. Process according to at least one of Claims 10 to 13, **characterized in that**, for the reaction in process step b), a dehydrogenative condensation is carried out.

## Revendications

1. Utilisation d'une composition contenant au moins un composé de formule générale (I) 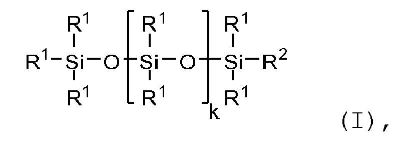 dans laquelle
R¹ représente des radicaux hydrocarbonés identiques ou différents, aromatiques ou aliphatiques à chaîne droite ou ramifiée, éventuellement insaturés, éventuellement halogénés, ayant de 1 à 8 atomes de carbone,
k = 0 à 10,
R² représente un groupe de formule A-B-D-Q,
A étant un atome d'oxygène, un groupe CH₂ ou un groupe CH=CH,
B étant un groupe CH₂ ou un radical divalent, choisi parmi des groupes alkyle, aryle, alkylaryle ou arylalkyloxy linéaires ou ramifiés, saturés, une ou plusieurs fois insaturés, ayant de 2 à 20 atomes de carbone, ou un groupe de formule -CH₂-O-(CH₂)₄-O-,
D étant un groupe de formule générale (II)
- (C₂H₄O)ₙ(C₃H₆O)ₒ(C₁₂H₂₄O)ₚ(C₈H₈O)_{q}(C₄H₈O)ᵣ- (II)
où
n, o, p, q et r sont, indépendamment les uns des autres, des nombres entiers valant de 0 à 50, la somme des indices n + o + p + q + r étant supérieure ou égale à 3 et la formule générale II représentant un oligomère statistique ou un oligomère séquencé, et
Q étant un radical choisi parmi un atome d'hydrogène, des groupes alkyle, aryle, alkylaryle ou arylalkyloxy linéaires ou ramifiés, saturés, une ou plusieurs fois insaturés, ayant de 1 à 20 atomes de carbone, éventuellement contenant un ou plusieurs hétéroatomes, éventuellement contenant un ou plusieurs groupes carbonyle, éventuellement modifiés par un groupe organique ionique,
dans la production de mousses de polyester-polyuréthanne.

2. Utilisation selon la revendication 1, **caractérisée en ce que** le radical R¹ de la formule générale (I) représente des groupes méthyle, p = q = r = 0, la somme des indices n + o est supérieure ou égale à 3 et Q est choisi dans l'ensemble comprenant un atome d'hydrogène et
| | |
|---|---|
| -CH₃ | 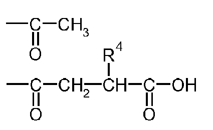 |
| -(CH₂)₃CH₃ | |
| -CH₂ CH=CH₂ | |
| -SO₃H | 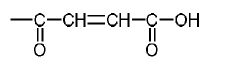 |
| -SO₃^{- 1}/_{w} M^{w+} | |
| -(CH₂)₂SO₃^{- 1}/_{w} M^{w+} | 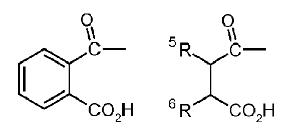 |
| -(CH₂)₃-SO₃^{- 1}/_{w} M^{w+} | |
| -(CH₂)₄ SO₃^{- 1}/_{w} M^{w+} | |
| -PO₃^{2- 2}/_{w} M^{w+} | 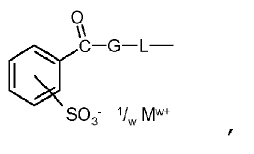 |
| -PO₃H^{- 1}/_{w} M^{w+} | |
| -PO₃H₂ | |
M^{w+} représentant un cation w-valent où w = 1, 2, 3, ou 4,
et
R⁴ représentant un atome d'hydrogène ou un radical aliphatique ayant de 1 à 20 atomes de carbone,
R⁵ et R⁶ représentant des radicaux aliphatiques identiques ou différents,
G représentant un atome d'oxygène, NH ou un groupe NR⁷, R⁷ étant un groupe alkyle monovalent et
L représentant un radical alkyle divalent, ramifié ou non ramifié, contenant éventuellement de l'oxygène et/ou de l'azote.

3. Utilisation selon la revendication 1 ou 2, **caractérisée en ce que** le radical R¹ de la formule générale (I) représente exclusivement des groupes méthyle, p = q = r = 0, la somme des indices n + o est supérieure ou égale à 3, et Q est choisi dans l'ensemble comprenant un atome d'hydrogène, les radicaux acétyle, méthyle, éthyle, butyle et allyle.

4. Utilisation selon au moins l'une des revendications 1 à 3, **caractérisée en ce que** le radical A représente un groupe CH₂.

5. Utilisation selon au moins l'une des revendications 1 à 3, **caractérisée en ce que** le radical A représente un atome d'oxygène.

6. Utilisation selon au moins l'une des revendications 1 à 5, **caractérisée en ce que** la composition comporte un ou plusieurs composés difonctionnels de formule générale (III) 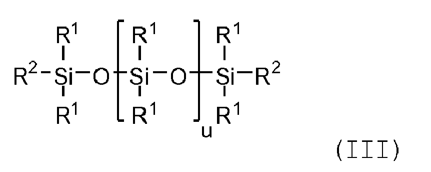 dans laquelle les radicaux sont tels que définis plus haut et u = 0 à 20.

7. Utilisation selon la revendication 6, **caractérisée en ce que** le rapport molaire des composés difonctionnels de formule (III) aux composés monofonctionnels de formule (I) est inférieur ou égal à 1/3.

8. Utilisation selon la revendication 7, **caractérisée en ce que** le rapport molaire des composés difonctionnels de formule (III) aux composés monofonctionnels de formule (I) est inférieur ou égal à 0,2.

9. Utilisation selon au moins l'une des revendications 1 à 8, **caractérisée en ce que** la proportion du composé de formule générale (I) dans le mélange à expanser vaut de 0,05 à 1 % en masse.

10. Procédé pour la préparation d'une composition contenant des composés de formule générale (I) telle que définie dans la revendication 1, **caractérisé en ce qu'**il comporte les étapes de processus
a) équilibrage d'un mélange contenant des siloxanes contenant des groupes R¹₃SiO_{1/2} et des groupes R¹₂SiO_{2/2} et des siloxanes contenant des groupes HSiR¹₂O_{1/2} et des groupes R¹₂SiO_{2/2} et éventuellement des cyclosiloxanes, le rapport molaire des groupes R¹₃SiO_{1/2} aux groupes HSiR¹₂O_{1/2} valant de 1:4 à 9:1,
b) mise en réaction du mélange d'équilibrage avec un composé A'-B-D-Q où A' = un groupe OH, un groupe vinyle ou un groupe éthynyle et B, D et Q sont tels que définis dans la revendication 1.

11. Procédé selon la revendication 10, **caractérisé en ce qu'**à la suite de l'étape b) du processus on élimine partiellement ou totalement par distillation dans une étape c) du processus des composés de formule générale (IV) 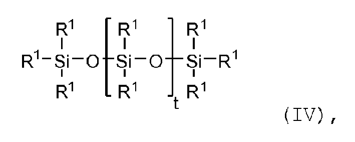 où R¹ est tel que défini dans la revendication 1, et t = 0 à 20.

12. Procédé selon la revendication 10 ou 11, **caractérisé en ce que** dans l'étape a) du processus on utilise les siloxanes en un rapport tel que le rapport molaire des groupes R¹₃SiO_{1/2} aux groupes HSiR¹₂O_{1/2} vaut de 1:1 à 6:1.

13. Procédé selon la revendication 12, **caractérisé en ce que** dans l'étape a) du processus on utilise les siloxanes en un rapport tel que le rapport molaire des groupes R¹₃SiO_{1/2} aux groupes HSiR¹₂O_{1/2} vaut de 5:2 à 4:1.

14. Procédé selon au moins l'une des revendications 10 à 13, **caractérisé en ce que** dans la réaction dans l'étape b) du processus on effectue une réaction d'hydrosilylation.

15. Procédé selon au moins l'une des revendications 10 à 13, **caractérisé en ce que** dans la réaction dans l'étape b) du processus on effectue une condensation déshydrogénante.
